# EUROPEAN PATENT SPECIFICATION

(11) **EP 3 491 840 B1**
(45) Date of publication and mention of the grant of the patent: **28.09.2022**
(21) Application number: 17834754.8
(22) Date of filing: 26.07.2017
(51) Int. Cl.: H04N 5/60, H04N 5/64, H04R 1/40, H04R 3/04, H04R 5/02, H04S 1/00, H04N 21/422, G10L 19/008

(54) **IMAGE DISPLAY APPARATUS**
BILDANZEIGEVORRICHTUNG
APPAREIL D'AFFICHAGE D'IMAGES

(30) Priority: 26.07.2016 US 201662366640 P; 26.09.2016 KR 20160123136
(43) Date of publication of application: 05.06.2019
(73) Proprietor: LG Electronics Inc., Seoul 07336 (KR)
(72) Inventor: KO, Youngin, Seoul 06772 (KR); HWANG, Sungphil, Seoul 06772 (KR); YANG, Sungeun, Seoul 06772 (KR); JEONG, Seokhee, Seoul 06772 (KR)
(74) Representative: Katérle, Axel
(86) International application number: PCT/KR2017/008030
(87) International publication number: WO 2018/021813

(56) References cited:
- EP-A1- 0 605 224
- EP-A2- 0 303 912
- EP-A2- 0 356 871
- GB-A- 2 239 763
- GB-A- 2 357 931
- JP-A- H01 149 698
- JP-A- H06 165 084
- JP-A- 2006 109 241
- KR-A- 20100 066 826
- KR-A- 20120 015 667
- KR-A- 20140 014 639
- US-A1- 2009 208 041
- US-A1- 2010 158 299

## Description

### Technical Field

The present invention relates to an image display apparatus, and more particularly, to an image display apparatus for reducing acoustic interference between a first sound directed in a front direction and a second sound directed in a ceiling direction.

### Background Art

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services, compared to analog broadcasting.

Along with user demands for sounds that offer a feeling of presence, the performance of a speaker has been improved in image display apparatuses.

EP 0 356 871 A2 discloses an image display device including a display, a first speaker unit comprising a tweeter and a loudspeaker, and a second speaker unit comprising a first loudspeaker and a second loudspeaker, the first and second loudspeakers bring oriented so as to emit sound in an upward direction.

EP 0 605 224 A1 discloses a television set speaker system for generating a stereo effect, the system including a television set cabinet, a cathode ray tube screen, and front speakers, respectively located on the left and right sides of the cathode ray tube screen. The system further includes reflection type directional intensifier speakers oriented in a ceiling-ward direction.

JP H01 149698 A discloses a TV apparatus capable of generating a surrounding effect, the apparatus including left and right speaker boxes, each provided with a respective side protrusion. Speakers for direct sound are arranged on each of the speaker boxes for emitting sound in a front direction, while obliquely oriented speakers for indirect sound are arranged on each of the side protrusions for emitting sound toward a wall of a room in which the apparatus is located.

EP 0 303 912 A2 discloses a loudspeaker box configured to be arranged below a TV apparatus, the loudspeaker box including a pair of woofers for emitting sound in a rear direction, a pair of mid-range loudspeakers for emitting sound in a side direction, and one or more tweeters for emitting sound in a front direction. The woofers may be horizontally oriented. Alternatively, the woofers may be inclined in an upward direction.

GB 2 357 931 A discloses an audio-visual apparatus including a casing and a display screen, wherein a first loudspeaker is mounted on a plane top face of the casing to form a center channel speaker, second loudspeakers are mounted on opposite side faces of the casing to form respective left and right channel speakers, and a third loudspeaker is mounted on a rear face of the casing to form a woofer or sub-woofer.

### Disclosure of Invention

### Technical Problem

It is an object of the present invention to provide an image display apparatus for reducing acoustic interference between a first sound directed in a front direction and a second sound directed in a ceiling direction.

### Solution to Problem

In accordance with an aspect of the present invention, the above and other objects can be accomplished by the provision of an image display apparatus including the features of claim 1. An image display apparatus may include: a display, a first speaker unit to output a first sound in a front direction, and a second speaker unit to output a second sound in a ceiling direction. The second speaker unit includes an array speaker with a plurality of speakers.

A frequency band of the second sound may be higher than a frequency band of the first sound.

### Advantageous Effects of Invention

As is apparent from the foregoing description, an image display apparatus includes a display, a first speaker unit to output a first sound in a front direction, and a second speaker unit to output a second sound in a ceiling direction, and the second speaker unit includes an array speaker with a plurality of speakers. Therefore, acoustic interference between the first sound in the front direction and the second sound in the second direction can be reduced.

Particularly since an array speaker with a plurality of high-directivity speakers is used, the acoustic interference between the first sound in the front direction and the second sound in the second direction can be reduced.

As the frequency band of the second sound from the second speaker unit is set to be narrower than the frequency band of the first sound from the first speaker unit, the directivity of the second sound is further improved. Consequently, the acoustic interference between the first sound in the front direction and the second sound in the second direction can be reduced.

Particularly since the gain of an amplifier in the second speaker unit is set to be larger than the gain of an amplifier in the first speaker unit, a user can listen to the second sound farther from the user, uniformly together with the first sound nearer to the user.

### Brief Description of Drawings

The above and other objects, features and other advantages of the present invention will be more clearly understood from the following detailed description taken in conjunction with the accompanying drawings, in which:
FIG. 1 is a view illustrating an image display apparatus according to an embodiment of the present invention;
FIG. 2 is a block diagram of an image display apparatus according to an embodiment of the present invention;
FIG. 3 is a block diagram of a controller illustrated in FIG. 2;
FIG. 4a is a view illustrating a method for controlling a remote controller illustrated in FIG. 2;
FIG. 4b is a block diagram of the remote controller illustrated in FIG. 2;
FIGS. 5a, 5b, and 5c are views illustrating various sounds output from an image display apparatus;
FIGS. 6a to 6e are block diagrams of an audio processor, a first speaker unit, and a second speaker unit according to various embodiments of the present invention;
FIGS. 7a and 7b are graphs illustrating frequency bands of sounds output from a first speaker unit and a second speaker unit, respectively;
FIG. 8a is a block diagram of an audio processor, a first speaker unit, and a second speaker unit according to another embodiment of the present invention;
FIG. 8b is graphs illustrating frequency bands of sounds output from the first speaker unit and the second speaker unit illustrated in FIG. 8a;
FIG. 9a is timing diagrams of audio signals applied to a second speaker;
FIG. 9b is a view illustrating sounds output from the second speaker unit according to the audio signals illustrated in FIG. 9a;
FIGS. 10a to 11d are views illustrating pop-up and tilting of a second speaker unit; and
FIGS. 12a and 12b are views comparing a general speaker and an array speaker in terms of directivity.

### Best Mode for Carrying out the Invention

Embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

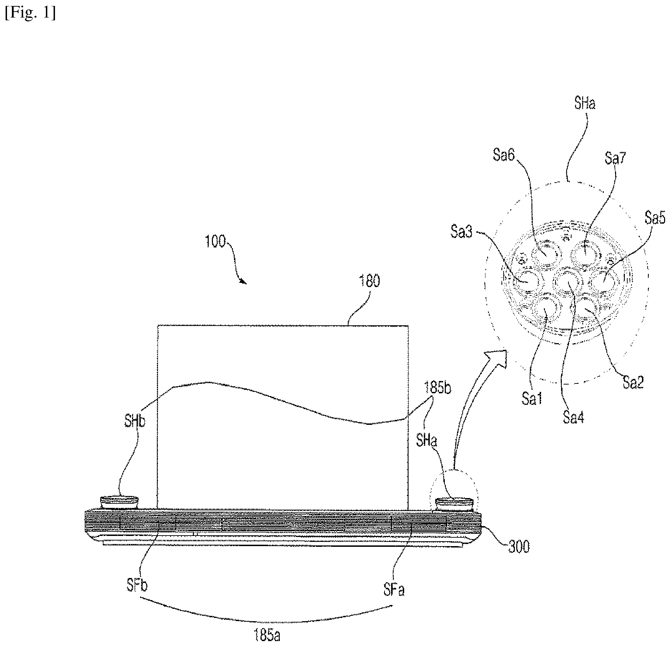

FIG. 1 is a view illustrating an image display apparatus according to an embodiment of the present invention.

Referring to FIG. 1, an image display apparatus 100 according to an embodiment of the present invention may include a display 180, a first speaker unit 185a for outputting a first sound in a front direction, and a second speaker unit 185b for outputting a second sound in a ceiling direction. The second speaker unit 185b may include an array speaker SHa with a plurality of speakers Sa1 to Sa7. Therefore, acoustic interference between the first sound in the front direction and the second sound in the ceiling direction may be reduced. The first speaker unit 185a and the second speaker unit 185b are shown in FIG. 1 as residing in a signal processor 300, by way of example.

The signal processor 300 may process a video signal and output the processed video signal to the display 180.

The signal processor 300 may also process an audio signal and output the processed audio signal to the first speaker unit 185a and the second speaker unit 185b.

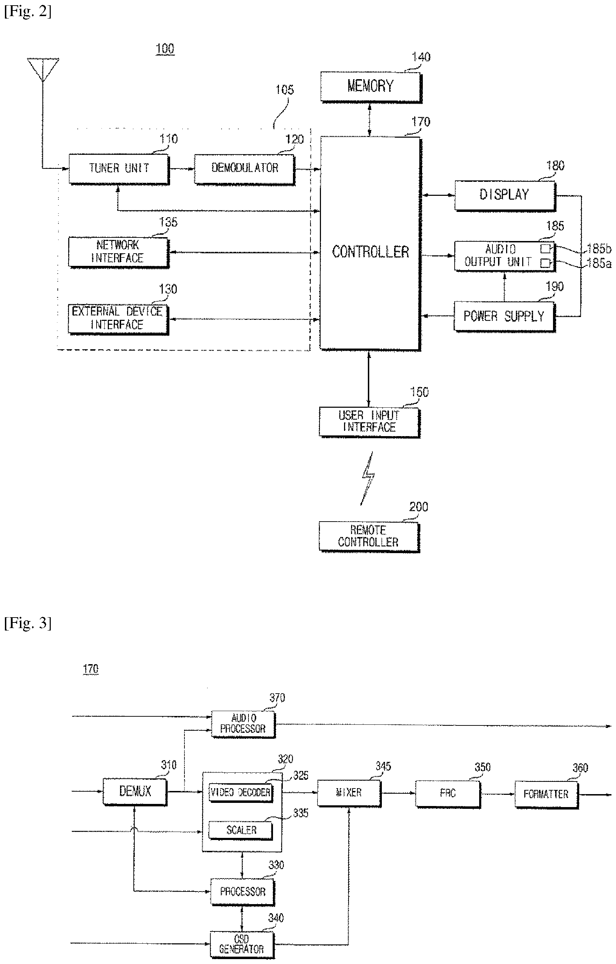

Meanwhile, the signal processor 300 may conceptually include a broadcasting receiver 105, a memory 140, a controller 170, a user input interface 150, and a power supply 190 illustrated in FIG. 2. That is, the display 180 may be excluded from the signal processor 300 in concept.

In FIG. 1, speakers SFa and SFb of the first speaker unit 185a are arranged on a front surface of the signal processor 300, and array speakers SHa and SHb of the second speaker unit 185b are arranged on top of the signal processor 300, by way of example.

The first sound from the first speaker unit 185a is output toward a user, whereas the second sound from the second speaker unit 185b is output toward a ceiling, reflected from the ceiling, and then reaches the user.

The first sound and the second sound are directed in different directions, and it is preferred that acoustic interference does not occur between the first sound and the second sound.

Accordingly, to improve particularly the directivity of the second sound, the second speaker unit 185b includes the array antenna SHa with the plurality of speakers Sa1 to Sa7 in the present invention.

While the array speaker SHa includes 7 speakers Sa1 to Sa7 in FIG. 1, by way of example, various modifications may be made to the array speaker SHa. Preferably, the array speaker SHa includes at least three speakers.

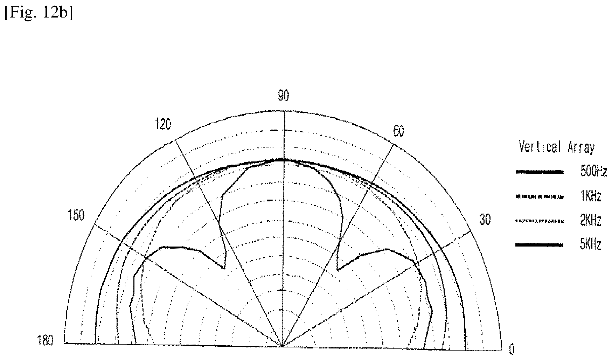

The directivity of an array antenna is more excellent than that of a general speaker, as described later with reference to FIG. 12b. Accordingly, the use of the array speaker SHa may lead to reduction of acoustic interference between the first sound directed in the front direction and the second sound directed in the ceiling direction.

The directivity of the second sound may be improved by setting the frequency band of the second sound from the second speaker unit 185b to be narrower than the frequency band of the first sound from the first speaker unit 185a, thereby reducing the acoustic interference between the first sound directed in the front direction and the second sound directed in the ceiling direction.

Particularly, if the gain of a power amplifier in the second speaker unit 185b is set to be larger than the gain of a power amplifier in the first speaker unit 185a, the user may listen to the second sound farther from the user, uniformly together with the first sound.

According to another embodiment of the present invention, the image display apparatus 100 includes the display 180, the first speaker unit 185a for outputting a first sound in a front direction, and the second speaker unit 185b for outputting a second sound in a ceiling direction. The second speaker unit 185b includes the array speaker SHa with the plurality of speakers Sa1 to Sa7. As the frequency band of the second sound is higher than the frequency band of the first sound, acoustic interference between the first sound in the front direction and the second sound in the ceiling direction may be reduced.

Particularly, the second speaker unit 185b outputs a high-frequency, high-directivity sound, thereby reducing the acoustic interference between the first sound in the front direction and the second sound in the ceiling direction.

FIG. 2 is a block diagram of an image display apparatus according to an embodiment of the present invention.

Referring to FIG. 2, the image display apparatus 100 according to the embodiment of the present invention may include the broadcasting receiver 105, an external device interface 130, the memory 140, the user input interface 150, a sensor unit (not shown), the controller 170, the display 180, and an audio output unit 185.

The broadcasting receiver 105 may include a tuner unit 110, a demodulator 120, and a network interface 135. As needed, the broadcasting receiver 105 may be configured so as to include only both the tuner unit 110 and the demodulator 120 or only the network interface 135.

The broadcasting receiver 105 may be configured to include the external device interface 135, differently from in FIG. 2. For example, a broadcast signal from a set-top box may be received through the external device interface 135.

The tuner unit 110 selects a Radio Frequency (RF) broadcast signal corresponding to a channel selected by a user or an RF broadcast signal corresponding to each of pre-stored channels from among a plurality of RF broadcast signals received through an antenna and downconverts the selected RF broadcast signal into a digital Intermediate Frequency (IF) signal or an analog baseband Audio/Video (A/V) signal.

For example, if the selected RF broadcast signal is a digital broadcast signal, the tuner unit 110 downconverts the selected RF broadcast signal into a digital IF signal, DIF. On the other hand, if the selected RF broadcast signal is an analog broadcast signal, the tuner unit 110 downconverts the selected RF broadcast signal into an analog baseband A/V signal, CVBS/SIF. That is, the tuner unit 110 may be a hybrid tuner capable of processing not only digital broadcast signals but also analog broadcast signals. The analog baseband A/V signal CVBS/SIF from the tuner unit 110 may be directly input to the controller 170.

The tuner unit 110 may sequentially select a number of RF broadcast signals corresponding to all broadcast channels previously stored in the image display apparatus 100 by a channel add function from a plurality of RF signals received through the antenna and may downconvert the selected RF broadcast signals into IF signals or baseband A/V signals.

The tuner unit 110 may include a plurality of tuners for receiving broadcast signals on a plurality of channels. Alternatively, the tuner unit 110 may be implemented into a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding on the digital IF signal DIF, thereby obtaining a stream signal TS. The stream signal TS may be a signal in which a video signal, an audio signal and/or a data signal are multiplexed.

The stream signal TS may be input to the controller 170 and thus subjected to demultiplexing and A/V signal processing. The controller 170 outputs the processed video and audio signals to the display 180 and the audio output unit 185, respectively.

The external device interface 130 may transmit data to or receive data from a connected external device. For data transmission and reception, the external device interface 130 may include an A/V Input/Output (I/O) unit (not shown) and/or a wireless communication module (not shown).

The external device interface 130 may be connected to an external device such as a Digital Versatile Disk (DVD) player, a Blu-ray player, a game console, a camera, a camcorder, a computer (e.g. a laptop computer), or a set-top box, wirelessly or by wire. Then, the external device interface 130 may transmit and receive signals to and from the external device.

The A/V I/O unit of the external device interface 130 may receive video and audio signals from the external device. The wireless communication module of the external device interface 130 may perform short-range wireless communication with other electronic devices.

The network interface 135 serves as an interface between the image display apparatus 100 and a wired/wireless network such as the Internet. For example, the network interface 135 may receive contents or data from the Internet or from a Contents Provider (CP) or a Network Provider (NP) over a network.

The memory 140 may store programs necessary for the controller 170 to process and control signals, and may also store processed video, audio, and data signals.

The memory 140 may also temporarily store a video, audio and/or data signal received from the external device interface 130. The memory 140 may store information about broadcast channels by the channel-add function such as a channel map.

While the memory 140 is shown in FIG. 2 as configured separately from the controller 170, to which the present invention is not limited, the memory 140 may be incorporated into the controller 170, for example.

The user input interface 150 transmits a signal received from the user to the controller 170 or transmits a signal received from the controller 170 to the user.

For example, the user input interface 150 may receive user input signals such as a power-on/off signal, a channel selection signal, and a screen setting signal from a remote controller 200, provide the controller 170 with user input signals received from local keys (not shown), such as inputs of a power key, a channel key, a volume key, and a setting key, transmit a user input signal received from the sensor unit (not shown) for sensing a user gesture to the controller 170, or transmit a signal received from the controller 170 to the sensor unit.

The controller 170 may demultiplex the stream signal TS received from the tuner unit 110, the demodulator 120, or the external device interface 130 into a number of signals and process the demultiplexed signals into audio and video data.

The video signal processed by the controller 170 may be displayed as an image corresponding to the video signal on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

While not shown in FIG. 2, the controller 170 may include a Demultiplexer (DEMUX) and a video processor, which will be described later with reference to FIG. 3.

In addition, the controller 170 may provide overall control to the image display apparatus 100. For example, the controller 170 may control the tuner unit 110 to select an RF broadcast signal corresponding to a user-selected channel or a pre-stored channel.

The controller 170 may control the image display apparatus 100 according to a user command received through the user input interface 150 or according to an internal program.

The controller 170 may also control the display 180 to display an image. The image displayed on the display 180 may be a Two-Dimensional (2D) or Three-Dimensional (3D) still image or video.

The controller 170 may control a particular 2D object in the image displayed on the display 180 to be rendered as a 3D object. For example, the particular 2D object may be at least one of a linked Web page (e.g. from a newspaper, a magazine, etc.), an Electronic Program Guide (EPG), a menu, a widget, an icon, a still image, a video, or text.

The 3D object may be processed so as to have a different sense of depth from that of an image displayed on the display 180. Preferably, the 3D object may be processed to look protruding, compared to the image displayed on the display 180.

The controller 170 may locate the user based on an image captured by a camera unit (not shown). Specifically, the controller 170 may measure the distance (a z-axis coordinate) between the user and the image display apparatus 100. In addition, the controller 170 may calculate x-axis and y-axis coordinates corresponding to the position of the user on the display 180.

The image display apparatus 100 may further include a channel browsing processor (not shown) for generating thumbnail images corresponding to channel signals or external input signals. The channel browsing processor may extract some of the video frames of each of stream signals TS received from the demodulator 120 or stream signals received from the external device interface 130 and display the extracted video frames on the display 180 as thumbnail images. The thumbnail images may be output to the controller 170 after they are decoded together with a decoded image to a stream. The controller 170 may display a thumbnail list including a plurality of received thumbnail images on the display 180.

The thumbnail list may be displayed on a part of the display 180 with an image displayed on the display 180, that is, as a compact view, or the thumbnail list may be displayed in full screen on the display 180. The thumbnail images of the thumbnail list may be updated sequentially.

The display 180 generates drive signals by converting a processed video signal, a processed data signal, an On Screen Display (OSD) signal, and a control signal received from the controller 170 or a video signal, a data signal, and a control signal received from the external device interface 130.

The display 180 may be various types of displays such as a Plasma Display Panel (PDP), a Liquid Crystal Display (LCD), an Organic Light-Emitting Diode (OLED) display, and a flexible display. The display 180 may also be a 3D display.

For 3D visualization, the display 180 may be configured into an auto-stereoscopic 3D display (glasses-free) or a traditional stereoscopic 3D display (with glasses).

Auto-stereoscopy is any method of displaying 3D images without any additional display, for example, special glasses on the part of a user. A lenticular scheme and a parallax barrier scheme are examples of auto-stereoscopic 3D imaging.

The traditional stereoscopy requires an additional display as a viewing device (not shown) besides the display 180 in order to display 3D images. The additional display may be a Head Mount Display (HMD) type, a glasses type, etc.

As special 3D glasses, polarized glasses operate in a passive manner, whereas shutter glasses operate in an active manner. Also, HMD types may be categorized into passive ones and active ones.

The viewing device (not shown) may be 3D glasses that enable the user to view 3D images. The 3D glasses (not shown) may be passive-type polarized glasses, active-type shutter glasses, or an HMD type.

The display 180 may also be a touch screen that can be used not only as an output device but also as an input device.

The audio output unit 185 may receive a processed audio signal from the controller 170 and output the received audio signal as voice.

As described before, the audio output unit 185 may include the first speaker unit 185a and the second speaker unit 185b. The second speaker unit 185b may include the array speakers SHa and SHb each including a plurality of speakers.

The camera unit (not shown) captures a user. The camera unit may include, but not limited to, a single camera. When needed, the camera unit may include a plurality of cameras. The camera unit may be embedded above the display 180 in the image display apparatus 100, or may be separately configured. Image information captured by the camera unit may be provided to the controller 170.

The controller 170 may sense a user's gesture from a captured image received from the camera unit or from signals received from the sensor unit (not shown) alone or in combination.

The power supply 190 supplies power across the whole image display apparatus 100. Particularly, the power supply 190 may supply power to the controller 170 which may be implemented as a System On Chip (SOC), the display 180 for displaying an image, and the audio output unit 185 for outputting an audio signal.

Specifically, the power supply 190 may include a converter for converting Alternating Current (AC) power to Direct Current (DC) power, and a DC/DC converter for converting the level of DC power.

The remote controller 200 transmits a user input to the user input interface 150. For the transmission of a user input, the remote controller 200 may operate based on various communication standards such as Bluetooth, RF communication, IR communication, Ultra WideBand (UWB), and ZigBee. In addition, the remote controller 200 may receive a video signal, an audio signal and/or a data signal from the user input interface 150 and may output the received signal as an image or sound.

The above-described image display apparatus 100 may be a fixed or mobile digital broadcast receiver.

The block diagram of the image display apparatus 100 illustrated in FIG. 2 is an exemplary embodiment of the present invention. The image display apparatus 100 is shown in FIG. 2 as having a number of components in a given configuration. However, the image display apparatus 100 may include fewer components or more components than those shown in FIG. 2. Also, two or more components of the image display apparatus 100 may be combined into a single component or a single component thereof may be separated into two more components. The functions of the components of the image display apparatus 100 as set forth herein are illustrative in nature and may be modified, for example, to meet the requirements of a given application.

Unlike the configuration illustrated in FIG. 2, the image display apparatus 100 may be configured so as to receive and playback video contents through the network interface 135 or the external device interface 130, without the tuner unit 100 and the demodulator 120.

The image display apparatus 100 is an example of an image signal processing apparatus that processes an input or stored image. In another example, the image display apparatus 100 may be implemented into a set-top box without the display 180 and the audio output unit 185 illustrated in FIG. 2, a DVD player, a Blue-ray player, a game console, a computer, or the like.

FIG. 3 is a block diagram of the controller illustrated in FIG. 2.

Referring to FIG. 3, the controller 170 may include a DEMUX 310, a video processor 320, a processor 330, an OSD generator 340, a mixer 345, a Frame Rate Converter (FRC) 350, and a formatter 360 according to an embodiment of the present invention. The controller 170 may further include an audio processor 370 and a data processor (not shown).

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120, or the external device interface 130.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal may be displayed on the display 180.

The video decoder 325 may be provided with decoders that operate in conformance to various standards.

The decoded video signal processed by the video processor 320 may be a 2D video signal, a 3D video signal, or a combination of both.

For example, it may be determined whether an external video signal received from an external device or a video signal included in a broadcast signal received from the tuner unit 110 is a 2D signal, a 3D signal, or a combination of both. Accordingly, the controller 170, particularly the video processor 320 processes the video signal and outputs a 2D video signal, a 3D video signal, or a combination of both.

The decoded video signal from the video processor 320 may be a 3D video signal in any of various available formats. For example, the decoded video signal may be a 3D video signal with a color image and a depth image or a 3D video signal including multi-viewpoint image signals. The multi-viewpoint image signals may include, for example, a left-eye image signal and a right-eye image signal.

For 3D visualization, available 3D formats are a side-by-side format, a top/down format, a frame sequential format, an interlaced format, and a checker box format. A left-eye image L and a right-eye image R are arranged side by side in the side by side format. The left-eye image L and the right-eye image R are stacked vertically in the top/down format, while they are arranged in time division in the frame sequential format. In the interlaced format, the left-eye image L and the right-eye image R alternate line by line. The left-eye image L and the right-eye image R are mixed on a box basis in the checker box format.

The processor 330 may provide overall control to the image display apparatus 100 or the controller 170. For example, the processor 330 may control the tuner unit 110 to tune to an RF broadcasting corresponding to a user-selected channel or a pre-stored channel.

The processor 330 may also control the image display apparatus 100 according to a user command received through the user input interface 150 or an internal program.

The processor 330 may control data transmission through the network interface 135 or the external device interface 130.

The processor 330 may control operations of the DEMUX 310, the video processor 320, and the OSD generator 340 in the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (UI), a variety of menus, widgets, and icons. Also, the OSD signal may include a 2D object and/or a 3D object.

Further, the OSD generator 340 may generate a pointer to be displayed on the display 180 based on a pointing signal received from the remote controller 200. Especially, the pointer may be generated from a pointing signal processor (not shown), which may reside in the OSD generator 340. Obviously, the pointing signal processor may be configured separately from the OSD generator 240.

The mixer 345 may mix the decoded video signal processed by the video processor 320 with the OSD signal generated from the OSD generator 340. The OSD signal and the decoded video signal each may include at least one of a 2D signal and a 3D signal. The mixed video signal is provided to the FRC 350.

The FRC 350 may change the frame rate of an input video signal or simply output the video signal without frame rate conversion.

The formatter 360 may arrange left-eye and right-eye video frames of the frame rate-converted 3D image. The formatter 360 may also output a synchronization signal Vsync for opening the left and right lenses of a 3D viewing device (not shown).

The formatter 360 may receive the mixed signal, that is, the OSD signal and the decoded video signal in combination from the mixer 345 and may separate a 2D video signal from a 3D video signal.

The formatter 360 may change the format of the 3D video signal. For example, the formatter 360 may convert a 3D image into one of the foregoing various formats.

Meanwhile, the formatter 360 may convert a 2D video signal to a 3D video signal. For example, the formatter 360 may detect edges or a selectable object from the 2D video signal and generate a 3D video signal with an object based on the detected edges or the selectable object. As described before, the 3D video signal may be arranged separately as a left-eye image signal L and a right-eye image signal R.

A 3D processor (not shown) may further be provided after the formatter 360, for processing a signal to exert 3D effects. For enhancing 3D effects, the 3D processor may adjust the brightness, tint, and color of a video signal. For example, the 3D processor may process a video signal in such a manner that a short-distance area may become clear and a long-distance area may become blurry. Meanwhile, this functionality of the 3D processor may be incorporated into the formatter 360 or the video processor 320.

The audio processor 370 of the controller 170 may process the demultiplexed audio signal, or an audio signal of specific contents. For the audio signal processing, the audio processor 370 may have a plurality of decoders.

The audio processor 370 of the controller 170 may also adjust the bass, treble, and volume of the audio signal.

The data processor (not shown) of the controller 170 may process the data signal obtained by demultiplexing the input stream signal. For example, if the demultiplexed data signal is a coded data signal, the data processor may decode the coded data signal. The coded data signal may be an EPG which includes broadcast information specifying the start time, end time, and the like of a scheduled broadcast TV or radio program.

While it is shown in FIG. 3 that the mixer 345 mixes signals received from the OSD generator 340 and the video processor 320 and then the formatter 360 performs 3D processing on the mixed signal, to which the present invention is not limited, the mixer 345 may be positioned after the formatter 360. That is, the formatter 360 may subject an output of the video processor 320 to a 3D process, the OSD generator 340 may generate an OSD signal and perform a 3D process on the OSD signal, and then the mixer 345 may mix the processed 3D signals received from the formatter 360 and the OSD generator 340.

The block diagram of the controller 170 illustrated in FIG. 3 is purely exemplary. Depending upon the specifications of the controller 170 in actual implementation, the components of the controller 170 may be combined or omitted or new components may be added. That is, two or more components are incorporated into one component or one component may be configured as separate components, as needed.

Especially, the FRC 350 and the formatter 360 may be configured as separate components or as a single component, outside the controller 170.

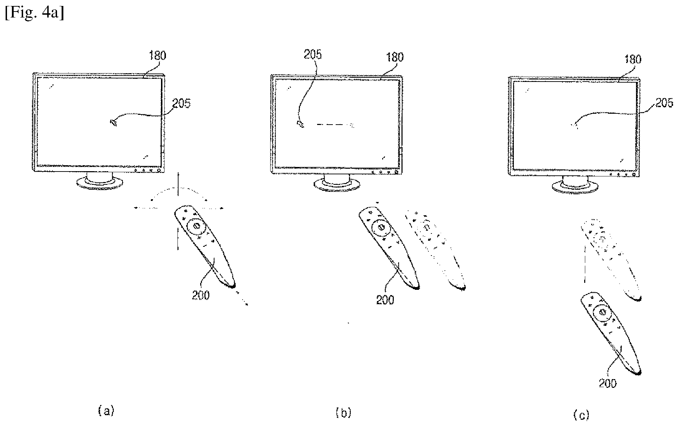

FIG. 4a illustrates a method for controlling the remote controller illustrated in FIG. 2.
(a) of FIG. 4a illustrates a pointer 205 representing movement of the remote controller 200, displayed on the display 180.

The user may move or rotate the remote controller 200 up and down, side to side ((b) of FIG. 4a), and back and forth ((c) of FIG. 4a). Since the pointer 205 moves in accordance with the movement of the remote controller 200 in a 3D space, the remote controller 200 may be referred to as a spatial remote controller or a 3D pointing device.

Referring to (b) of FIG. 4a, if the user moves the remote controller 200 to the left, the pointer 205 moves to the left on the display 180.

A sensor of the remote controller 200 detects the movement of the remote controller 200 and transmits motion information corresponding to the result of the detection to the image display apparatus. Then, the image display apparatus may determine the movement of the remote controller 200 based on the motion information received from the remote controller 200, and calculate the coordinates of a target point to which the pointer 205 should be shifted in accordance with the movement of the remote controller 200 based on the result of the determination. The image display apparatus then displays the pointer 205 at the calculated coordinates.

Referring to (c) of FIG. 4a, while pressing a predetermined button of the remote controller 200, the user moves the remote controller 200 away from the display 180. Then, a selected area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. The opposite case is possible. That is, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

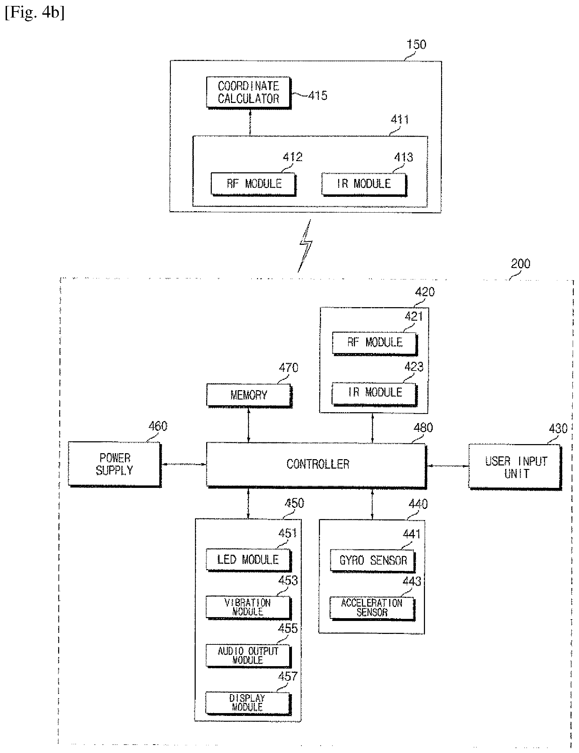

FIG. 4b is a block diagram of the remote controller illustrated in FIG. 2.

Referring to FIG. 4b, the remote controller 200 may include a wireless communication module 420, a user input unit 430, a sensor unit 440, an output unit 450, a power supply 460, a memory 470, and a controller 480.

The wireless communication module 420 transmits signals to and/or receives signals from one of image display apparatuses according to embodiments of the present invention. One of the image display apparatuses according to embodiments of the present invention, that is, the image display apparatus 100 will be taken as an example.

In the embodiment of the present invention, the wireless communication module 420 may include an RF module 421 for transmitting RF signals to and/or receiving RF signals from the image display apparatus 100 according to an RF communication standard. The wireless communication module 420 may also include an IR module 423 for transmitting IR signals to and/or receiving IR signals from the image display apparatus 100 according to an IR communication standard.

The remote controller 200 transmits motion information regarding the movement of the remote controller 200 to the image display apparatus 100 through the RF module 421 in the embodiment of the present invention.

The remote controller 200 may also receive signals from the image display apparatus 100 through the RF module 421. The remote controller 200 may transmit commands, such as a power on/off command, a channel switching command, or a sound volume change command, to the image display apparatus 100 through the IR module 423, as needed.

The user input unit 430 may include a keypad, a plurality of buttons, a touch pad, or a touch screen. The user may enter commands to the image display apparatus 100 by manipulating the user input unit 430. If the user input unit 430 includes a plurality of hard-key buttons, the user may input various commands to the image display apparatus 100 by pressing the hard-key buttons. If the user input unit 430 includes a touch screen displaying a plurality of soft keys, the user may input various commands to the image display apparatus 100 by touching the soft keys. The user input unit 430 may also include various input tools other than those set forth herein, such as a scroll key and/or a jog key, which should not be construed as limiting the present invention.

The sensor unit 440 may include a gyro sensor 441 and/or an acceleration sensor 443. The gyro sensor 441 may sense the movement of the remote controller 200.

For example, the gyro sensor 441 may sense motion information about the remote controller 200 in X-, Y-, and Z-axis directions. The acceleration sensor 443 may sense the moving speed of the remote controller 200. The sensor unit 440 may further include a distance sensor for sensing the distance between the remote controller 200 and the display 180.

The output unit 450 may output a video and/or audio signal corresponding to a manipulation of the user input unit 430 or a signal transmitted by the image display apparatus 100. The user may easily identify whether the user input unit 430 has been manipulated or whether the image display apparatus 100 has been controlled based on the video and/or audio signal output from the output unit 450.

For example, the output unit 450 may include a Light Emitting Diode (LED) module 451 which is turned on or off whenever the user input unit 430 is manipulated or whenever a signal is received from or transmitted to the image display apparatus 100 through the wireless communication module 420, a vibration module 453 which generates vibrations, an audio output module 455 which outputs audio data, or a display module 457 which outputs an image.

The power supply 460 supplies power to the remote controller 200. If the remote controller 200 is kept stationary for a predetermined time or longer, the power supply 460 may, for example, reduce or cut off supply of power to the remote controller 200 in order to save power. The power supply 460 may resume supply of power if a specific key on the remote controller 200 is manipulated.

The memory 470 may store various programs and application data for controlling or operating the remote controller 200. The remote controller 200 may wirelessly transmit signals to and/or receive signals from the image display apparatus 100 in a predetermined frequency band through the RF module 421. The controller 480 of the remote controller 200 may store information regarding the frequency band used for the remote controller 200 to wirelessly transmit signals to and/or wirelessly receive signals from the paired image display apparatus 100 in the memory 470 and may then refer to this information for use at a later time.

The controller 480 provides overall control to the remote controller 200. For example, the controller 480 may transmit a signal corresponding to a key manipulation detected from the user input unit 430 or a signal corresponding to motion of the remote controller 200, as sensed by the sensor unit 440, to the image display apparatus 100 through the wireless communication module 420.

The user input interface 150 of the image display apparatus 100 may include a wireless communication module 411 which wirelessly transmits signals to and/or wirelessly receives signals from the remote controller 200, and a coordinate calculator 415 which calculates coordinates representing the position of the remote controller 200 on the display screen, which is to be moved in accordance with the movement of the remote controller 200.

The user input interface 150 may wirelessly transmit RF signals to and/or wirelessly receive RF signals from the remote controller 200 through an RF module 412. In addition, the user input interface 150 may wirelessly receive IR signals from the remote controller 200 through an IR module 413 according to the IR communication standard.

The coordinate calculator 415 may receive motion information regarding the movement of the remote controller 200 through the wireless communication module 411 and may calculate coordinates (x, y) representing the position of the pointer 205 on a screen of the display 180 by correcting the motion information for possible errors or user hand tremor.

A signal received in the image display apparatus 100 from the remote controller 200 through the user input interface 150 may be transmitted to the controller 170. Then, the controller 170 may acquire information regarding the movement of the remote controller 200 and information regarding a key manipulation detected from the remote controller 200 from the signal received from the user input interface 150, and may control the image display apparatus 100 based on the acquired information.

In another example, the remote controller 200 may calculate the coordinates of a position to which the pointer is to be shifted in correspondence with its movement and output the coordinates to the user input interface 150 of the image display apparatus 100. In this case, the user input interface 150 may transmit information about the pointer coordinates which was not corrected for possible errors or user hand tremor to the controller 180.

In a further example, unlike the configuration of the remote controller 200 illustrated in FIG. 4b, the coordinate calculator 415 may reside in the controller 170, instead of the user input interface 150.

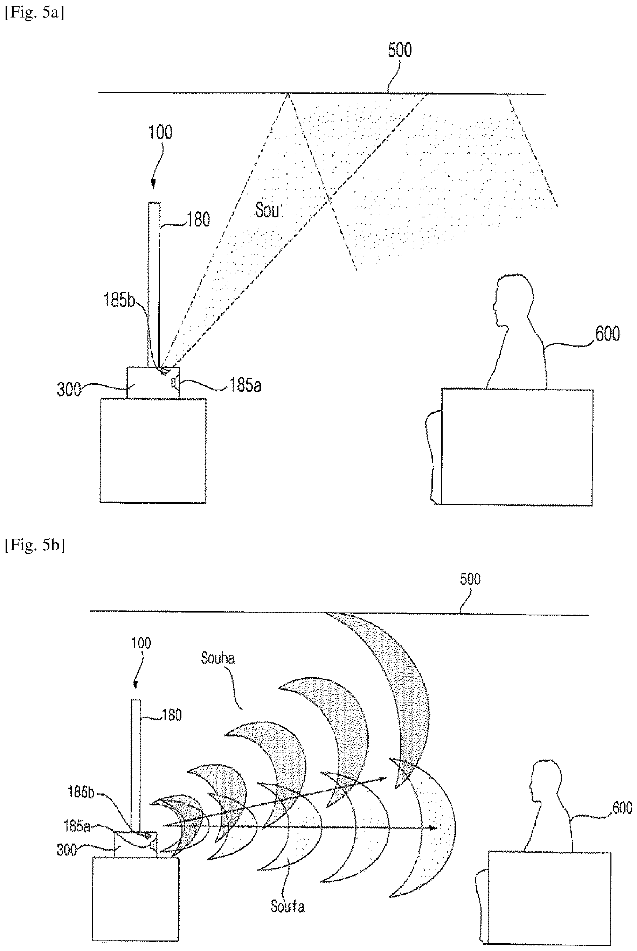

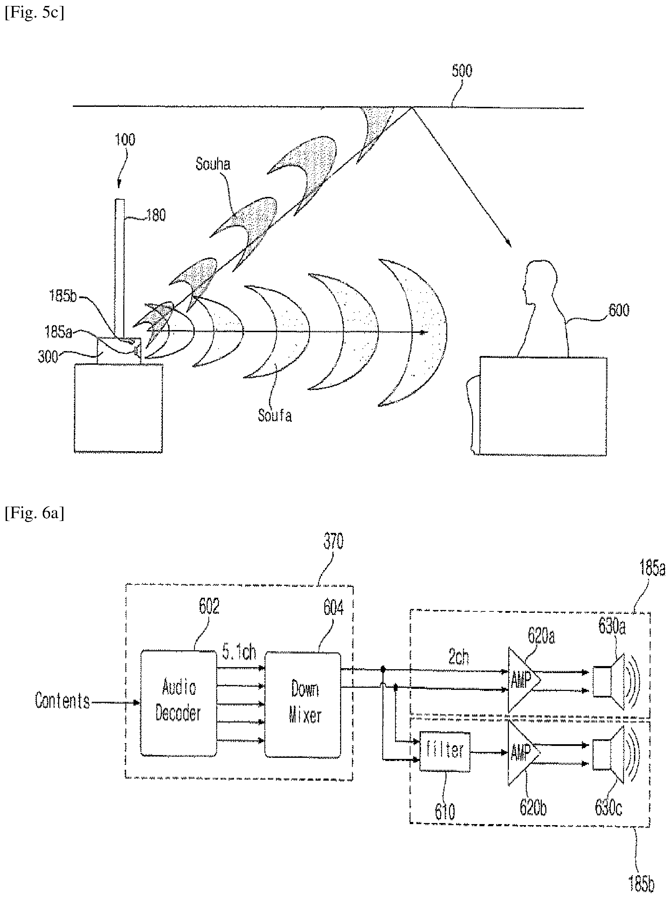

FIGS. 5a, 5b, and 5c are views illustrating various sounds output from an image display apparatus.

Referring to FIG. 5a, for example, the second speaker unit 185b of the image display apparatus 100 outputs a second sound Sou toward a ceiling 500. The second sound Sou may be reflected from the ceiling 500 and then reach a user 600.

Referring to FIG. 5b, for example, the first speaker unit 185a and the second speaker unit 185b of the image display apparatus 100 output a first sound Soufa in a front direction and a second sound Souha in a direction of the ceiling 500, respectively.

As illustrated in FIG. 5b, acoustic interference may occur between the first sound Soufa and the second sound Souha.

To reduce the acoustic interference, the present invention provides a method for increasing the directivity of a sound output from the second speaker unit 185b.

For this purpose, the second speaker unit 185b may include the array speakers SHa and SHb each including the plurality of speakers Sa1 to Sa7.

Referring to FIG. 5c, for example, the first speaker unit 185a and the second speaker unit 185b of the image display apparatus 100 output the first sound Soufa in the front direction and the second sound Souha in the direction of the ceiling 500, respectively.

Compared to FIG. 5b, FIG. 5c illustrates that the directivity of the second sound Souha in the direction of the ceiling 500 is improved and thus acoustic interference does not occur between the first sound Soufa and the second sound Souha. Accordingly, the user 600 may listen to sounds with an enhanced feeling of presence.

FIGS. 6a to 6e are block diagrams of an audio processor, a first speaker unit, and a second speaker unit according to various embodiments of the present invention.

Referring to FIG. 6a, according to an embodiment of the present invention, the image display apparatus 100 may include the audio processor 370 for outputting a first audio signal by performing audio signal processing on input contents, the first speaker unit 185a, and the second speaker unit 185b.

The first speaker unit 185a may include a first amplifier 620a for amplifying the first audio signal, and a speaker 630a for outputting a first sound based on the audio signal amplified by the first amplifier 620a.

The second speaker unit 185b may include a filter 610 for filtering the first audio signal, a second amplifier 620b for amplifying the filtered first audio signal, and a speaker 630c for outputting a second sound based on the audio signal amplified by the second amplifier 620b. Each of the speakers Sa1 to Sa7 may correspond to the speaker 630c.

The filter 610 may be a high-pass filter. Therefore, the frequency band of the second sound output from the second speaker unit 185b may be narrower than the frequency band of the first sound output from the first speaker unit 185a.

Meanwhile, the gain of the second amplifier 620b in the second speaker unit 185b may be larger than the gain of the first amplifier 620a in the first speaker unit 185a. As a consequence, the user may listen to the second sound farther from the user and the first sound nearer to the user together uniformly.

Meanwhile, the audio processor 370 may include an audio decoder 602 for performing audio decoding on the contents, and a down-mixer 604 for outputting a first audio signal of a second channel by down-mixing an audio signal of a first channel received from the audio decoder 602.

The audio signal of the first channel may be a 5.1-channel audio signal, and the second channel may be 2 channels. Thus, the down-mixer 604 may output a 2-channel first audio signal.

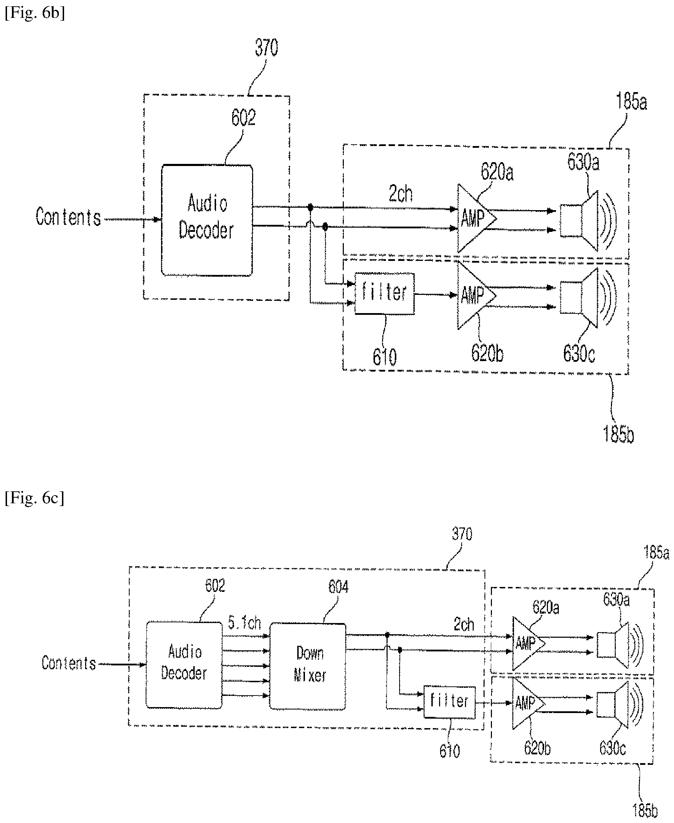

Referring to FIG. 6b, according to another embodiment of the present invention, the image display apparatus 100 may include the audio processor 370 for outputting a first audio signal, the first speaker unit 185a, and the second speaker unit 185b.

Although the audio processor 370 of FIG. 6b is similar to the audio processor of FIG. 6a, they are different in that the former does not include the down-mixer 604.

For example, upon receipt of 2-channel contents, the audio processor 370 of FIG. 6b may output a decoded 2-channel audio signal through the audio decoder 602.

Referring to FIG. 6c, according to another embodiment of the present invention, the image display apparatus 100 may include the audio processor 370 for outputting a first audio signal and a second audio signal, the first speaker unit 185a, and the second speaker unit 185b.

Although the audio processor 370 of FIG. 6c is similar to the audio processor of FIG. 6a, they are different in that the former includes the filter 610.

The filter 610 may output a filtered second audio signal by filtering a first audio signal.

Therefore, the audio processor 370 of FIG. 6c may perform audio signal processing on input contents, thus outputting the first audio signal and the second audio signal produced by filtering the first audio signal.

The first speaker unit 185a may include the first amplifier 620a for amplifying the first audio signal, and the speaker 630a for outputting a first sound based on the audio signal amplified by the first amplifier 620a.

The second speaker unit 185b may include the second amplifier 620b for amplifying the second audio signal, and the speaker 630c for outputting a second sound based on the audio signal amplified by the second amplifier 620b. Each of the speakers Sa1 to Sa7 corresponds to the speaker 630c.

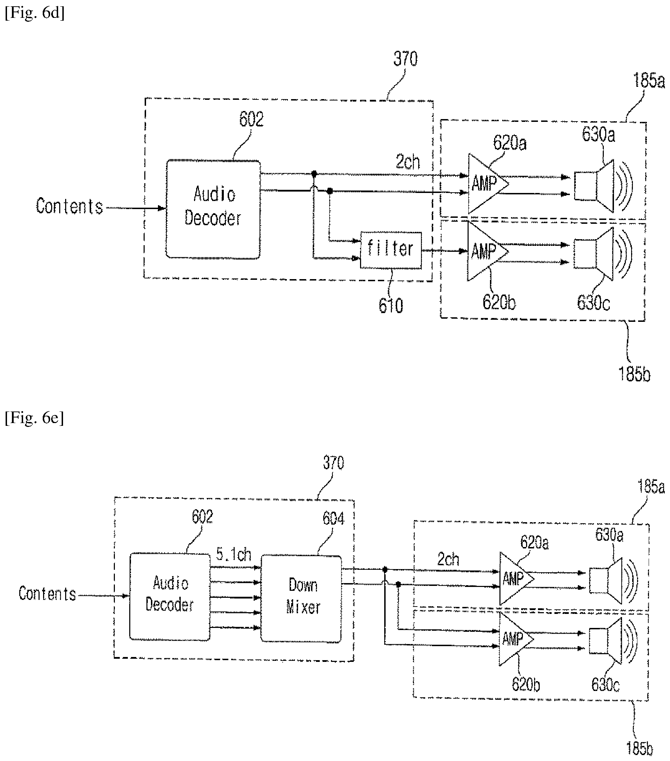

Referring to FIG. 6d, according to another embodiment of the present invention, the image display apparatus 100 may include the audio processor 370 for outputting a first audio signal, the first speaker unit 185a, and the second speaker unit 185b.

Although the audio processor 370 of FIG. 6d is similar to the audio processor of FIG. 6c, they are different in that the former does not include the down-mixer 604.

For example, upon receipt of 2-channel contents, the audio processor 370 of FIG. 6d may output decoded 2-channel first and second audio signals through the audio decoder 602.

Referring to FIG. 6e, according to another embodiment of the present invention, the image display apparatus 100 may include the audio processor 370 for outputting a first audio signal, the first speaker unit 185a, and the second speaker unit 185b.

Although the audio processor 370 of FIG. 6e is identical to the audio processor of FIG. 6a, the second speaker unit 185b of FIG. 6e is different from the second speaker unit 185b of FIG. 6e in that the former does not include the filter 610.

In this case, it is preferred that the gain of the second amplifier 620b of the second speaker unit 185b is larger than the gain of the amplifier 620a of the first speaker unit 185a.

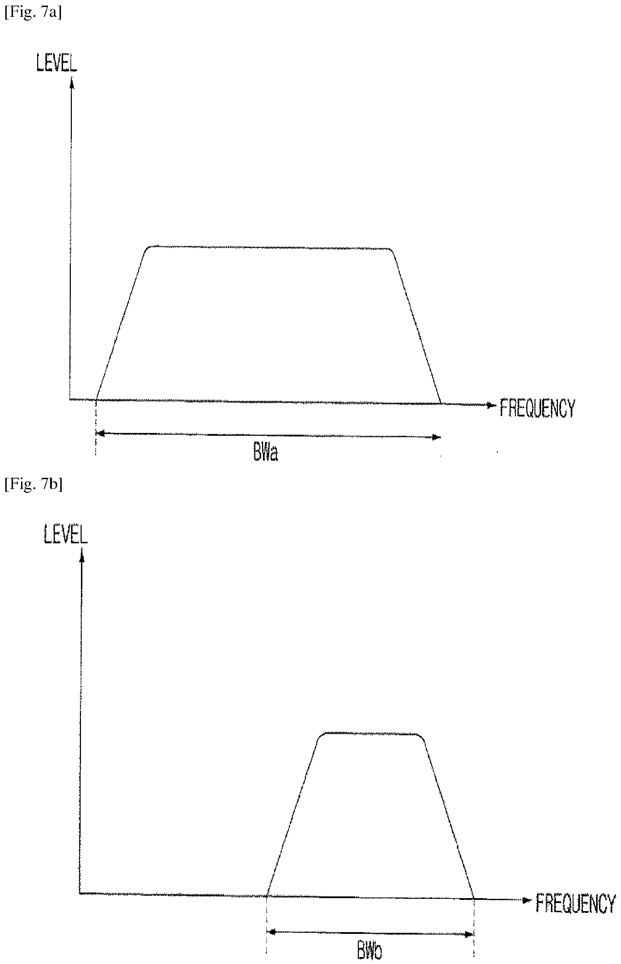

FIGS. 7a and 7b illustrate the frequency bands of sounds output from the first and second speaker units.

The filter 610 illustrated in FIGS. 6a to 6d may be a high-pass filter. Therefore, the frequency bandwidth of the first sound output from the first speaker unit 185a may be BWa, as illustrated in FIG. 7a, and the frequency bandwidth of the second sound output from the second speaker unit 185b may be BWb, as illustrated in FIG. 7b.

Because the frequency band of the second sound output from the second speaker unit 185b is narrower than the frequency band of the first sound output from the first speaker unit 185a, the directivity of the second sound is improved. Consequently, acoustic interference may be reduced, as illustrated in FIG. 5c.

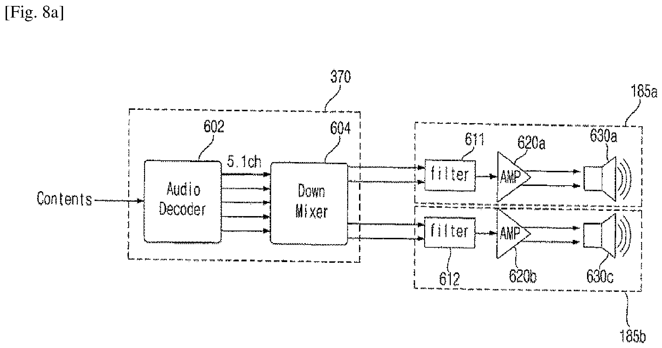

FIG. 8a is a block diagram of an audio processor, a first speaker unit, and a second speaker unit according to another embodiment of the present invention.

According to another embodiment of the present invention, the image display apparatus 100 may include the audio processor 370 for outputting a first audio signal, the first speaker unit 185a, and the second speaker unit 185b.

The audio processor 370 of FIG. 8a is identical to the audio processor of FIG. 6e, and the first and second speaker units 185a and 185b of FIG. 8a include a first filter 611 and a second filter 612, respectively.

The first speaker unit 185a may include the first filter 611 for filtering the first audio signal received from the audio processor 370, the first amplifier 620a for amplifying the filtered first audio signal, and the speaker 630a for outputting a first sound based on the audio signal amplified by the first amplifier 620a.

The second speaker unit 185b may include the second filter 612 for filtering the first audio signal received from the audio processor 370, the second amplifier 620b for amplifying the filtered first audio signal, and the speaker 630c for outputting a second sound based on the audio signal amplified by the second amplifier 620b. Each of the speakers Sa1 to Sa7 may correspond to the speaker 630c.

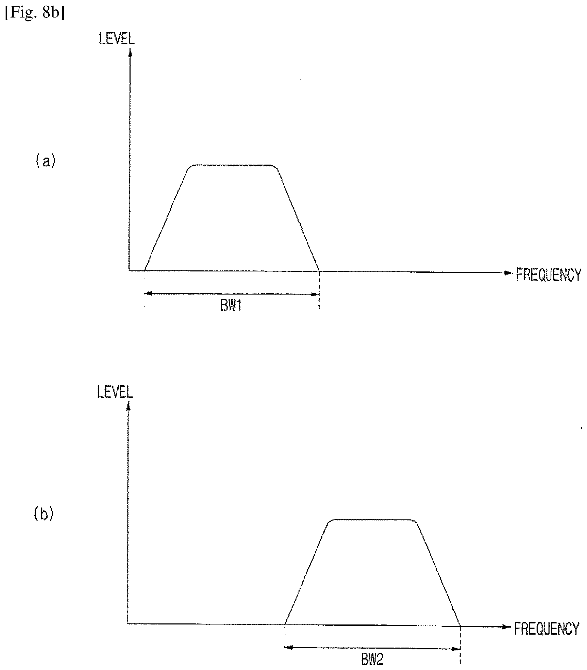

In FIG. 8b, the frequency band of the second filter 612 is wider than the frequency band of the first filter 611.

The first filter 611 of FIG. 8a may be a low-pass filter, and the second filter 612 of FIG. 8a may be a high-pass filter.

Since the frequency band of the second sound output from the second speaker unit 185b is higher than the frequency band of the first sound output from the first speaker unit 185a, the directivity of the second sound is improved. Consequently, acoustic interference may be reduced as illustrated in FIG. 5c.

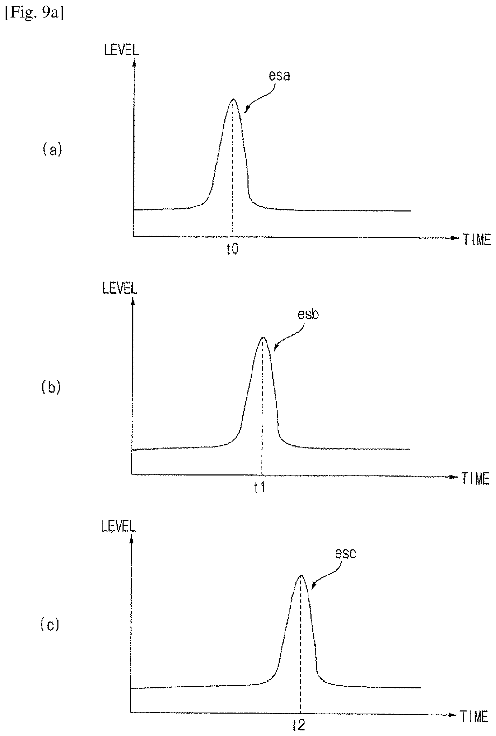

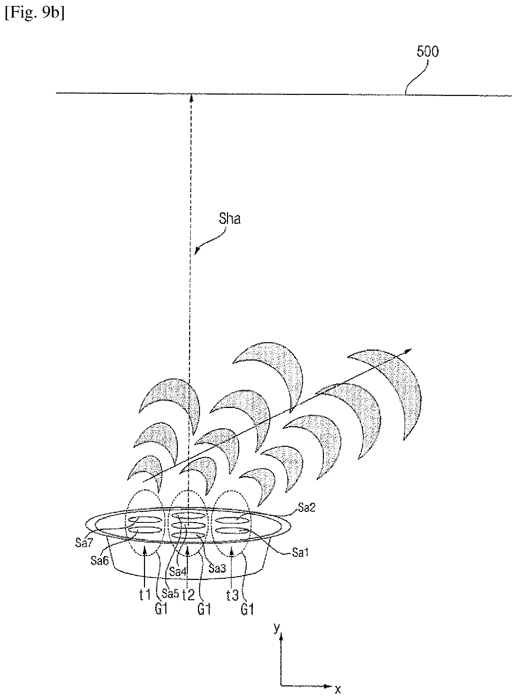

FIG. 9a is a diagram illustrating the timings of audio signals applied to the second speaker unit, and FIG. 9b illustrates sounds output from the second speaker unit according to the audio signals illustrated in FIG. 9a.

Referring to FIG. 9b, the second speaker unit 185b, that is, the array speaker SHa may include a first group G1 of the first and second speakers Sa1 and Sa2, a second group G2 of the third, fourth, and fifth speakers Sa3, Sa4, and Sa5, and a third group G3 of the sixth and seventh speakers Sa6 and Sa7.

The second speaker unit 185b, that is, the array speaker SHa may be arranged in parallel to the ceiling 500.

In this state, to steer the second sound in a direction between the front and the ceiling 500, the first and second speakers Sa1 and Sa2 of the first group G1 output a sound at a first time t1, the third, fourth, and fifth speakers Sa3, Sa4, and Sa5 of the second group G2 output a sound at a second time t2 after the first time t1, and the sixth and seventh speakers Sa6 and Sa7 of the third group G3 output a sound at a third time t3 after the second time t2 in the present invention.

For this purpose, a first electrical signal esa is applied to the first and second speakers Sa1 and Sa2 of the first group G1 at the first time t1, a second electrical signal esb is applied to the third, fourth, and fifth speakers Sa3, Sa4, and Sa5 of the second group G2 at the second time t2, and a third electrical signal esc is applied to the sixth and seventh speakers Sa6 and Sa7 of the third group G3 at the third time t3, as illustrated in FIG. 9a.

Unlike FIG. 9b, the second speaker unit 185b may be tilted toward a direction between the front and the ceiling 500.

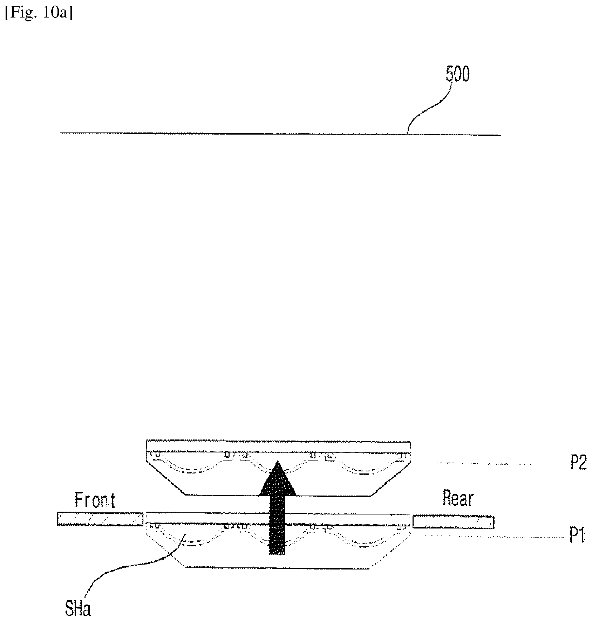

FIGS. 10a to 11d are views illustrating pop-up and tilting of the second speaker unit.

Referring to FIG. 10a, for example, the second speaker unit 185b, that is, the array speaker SHa is popped up from a position P1 to a position P2 by means of a movement means (not shown).

Herein, the second speaker unit 185b, that is, the array speaker SHa is kept parallel to the ceiling 500.

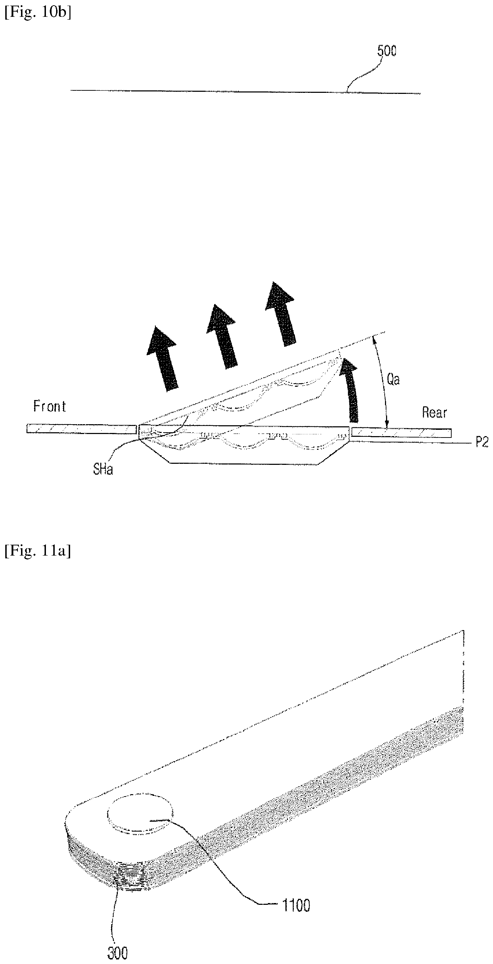

Referring to FIG. 10b, for example, the second speaker unit 185b, that is, the array speaker SHa is titled at the position P2 by means of a tilting means (not shown).

As a rear part of the array speaker SHa is raised for tilting, the second sound is output in a direction between the front and the ceiling 500 from the array speaker SHa.

Referring to FIG. 11a, an area with the array speaker SHa on the top of the signal processor 300 is covered with a cover 1100.

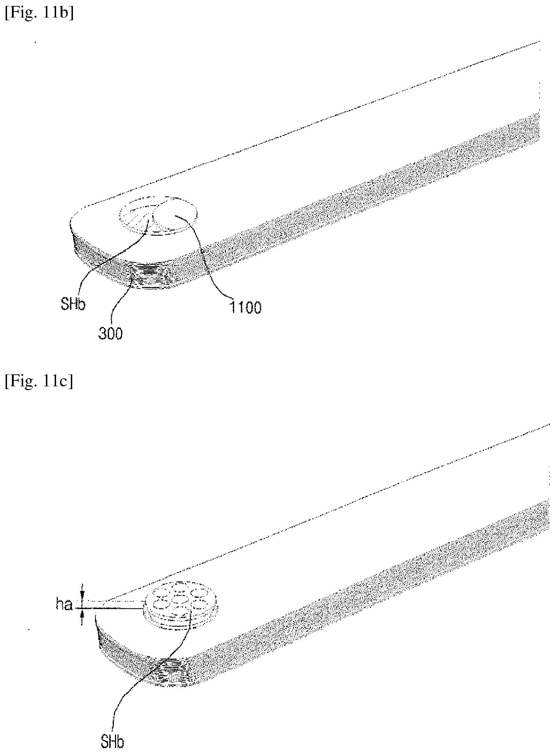

Referring to FIG. 11b, the cover 1100 is opened by a movement means (not shown).

Referring to FIG. 11c, the array speaker SHa is popped up by means of a movement means (not shown).

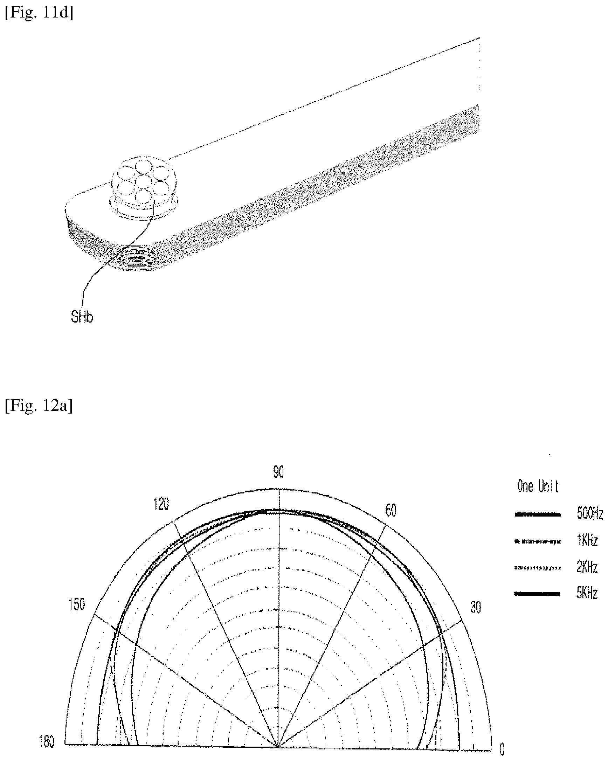

Referring to FIG. 11d, the array speaker SHa is tilted at the position P2 by means of a tilting means (not shown).

Therefore, the second sound is output in a direction between the front and the ceiling 500 from the array speaker SHa.

FIGS. 12a and 12b are views comparing a general speaker and an array speaker in terms of directivity.

FIG. 12a is a graph illustrating sensitivity (dB) with respect to space (0 to 180 degrees) of a sound signal output from a general speaker other than an array speaker.

Even though the frequency of the sound from the general speaker increases from 500Hz to 5KHz, the sensitivity of the sound changes little within the space. That is, the sound from the general speaker has a low directivity.

Meanwhile, the first speaker unit 185a may include a speaker illustrated in FIG. 12a.

FIG. 12b is a graph illustrating sensitivity (dB) with respect to space (0 to 180 degrees) of a sound signal output from each of the array speakers SHa and SHb.

If the frequency of the sound from the array speaker increases from 500Hz to 5KHz, the sensitivity of the sound changes within the space.

Accordingly, it is noted that if the frequency of a sound from the array speaker is high, a directivity is produced.

As described above, since the array speaker SHa with the plurality of high-directivity speakers Sa1 to Sa7 is used, acoustic interference between the first sound in the front direction and the second sound in the direction of the ceiling 500 may be reduced.

Particularly, as the second speaker unit 185b outputs a high-frequency sound with an improved directivity, the acoustic interference between the first sound in the front direction and the second sound in the direction of the ceiling 500 may be reduced.

A method for operating the image display apparatus according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner.

While the present invention has been particularly shown and described with reference to exemplary embodiments thereof, it will be understood by those of ordinary skill in the art that various changes in form and details may be made therein without departing from the scope of the present invention as defined by the following claims.

### Industrial Applicability

The present invention may be applied to an image display apparatus, and more particularly, to an image display apparatus capable of reducing acoustic interference between a first sound directed in a front direction and a second sound directed in a ceiling direction.

## Claims

1. An image display apparatus (100) comprising:
a display (180);
a signal processing device (300) to output a video signal to the display (180);
a first speaker unit (185a) disposed on a front surface of the signal processing device (300) and to output a first sound in a front direction; and
a second speaker unit (185b) disposed on top of the signal processing device (300),
wherein the second speaker unit (185b) includes an array speaker with a plurality of speakers, and
wherein, after a cover (1100) on the top of the signal processing device (300) is opened, the second speaker unit (185b) is popped up and tilted, and outputs a second sound toward a direction between the front direction and a ceiling direction.

2. The image display apparatus according to claim 1, wherein a frequency band of the second sound output from the second speaker unit (185b) is narrower than a frequency band of the first sound output from the first speaker unit (185a).

3. The image display apparatus according to claim 1, wherein a gain of an amplifier in the second speaker unit (185b) is larger than a gain of an amplifier in the first speaker unit (185a).

4. The image display apparatus according to claim 1, further comprising an audio processing device (370) to output a first audio signal by performing audio signal processing on input contents,
wherein the first speaker unit (185a) comprises a first amplifier to amplify the first audio signal, and a first speaker to output the first sound based on the audio signal amplified by the first amplifier, and
wherein the second speaker unit (185b) comprises a filter to filter the first audio signal, a second amplifier to amplify the filtered first audio signal, and the plurality of speakers to output the second sound based on the audio signal amplified by the second amplifier.

5. The image display apparatus according to claim 4, wherein the audio processing device (370) comprises :
an audio decoder (602) to perform audio decoding on the contents, and
a down-mixer (604) to output the first audio signal of a second channel by down-mixing an audio signal of a first channel received from the audio decoder.

6. The image display apparatus according to claim 1, further comprising an audio processing device (370) to output a first audio signal and a second audio signal by performing audio signal processing on input contents, the second audio signal being produced by filtering the first audio signal,
wherein the first speaker unit (185a) comprises a first amplifier to amplify the first audio signal, and a first speaker to output the first sound based on the audio signal amplified by the first amplifier, and
wherein the second speaker unit comprises a second amplifier to amplify the second audio signal, and the plurality of speakers to output the second sound based on the audio signal amplified by the second amplifier.

7. The image display apparatus according to claim 6, wherein the audio processing device comprises :
an audio decoder (602) to perform audio decoding on the contents,
a down-mixer (604) to output the first audio signal of a second channel by down-mixing an audio signal of a first channel received from the audio decoder, and
a filter (610) to output the second audio signal by filtering the first audio signal.

8. The image display apparatus according to claim 1, further comprising an audio processing device (370) to output a first audio signal by performing audio signal processing on input contents,
wherein the first speaker unit (185a) comprises a first filter to filter the first audio signal, a first amplifier to amplify the filtered first audio signal, and a first speaker to output the first sound based on the audio signal amplified by the first amplifier, and
wherein the second speaker unit (185b) comprises a second filter to filter the first audio signal, a second amplifier to amplify the filtered first audio signal, and the plurality of speakers to output the second sound based on the audio signal amplified by the second amplifier.

9. The image display apparatus according to claim 8, wherein a frequency band of the second filter is higher than a frequency band of the first filter.

10. The image display apparatus according to claim 1, wherein the second speaker unit (185b) includes at least three speakers.

11. The image display apparatus according to claim 1, wherein the second speaker unit (185b) comprises a first group of first and second speakers, a second group of third, fourth, and fifth speakers, and a third group of sixth and seventh speakers.

## Patentansprüche

1. Bildanzeigevorrichtung (100) umfassend:
eine Anzeige (180);
eine Signalverarbeitungsvorrichtung (300) zum Ausgeben eines Videosignals an die Anzeige (180);
eine erste Lautsprechereinheit (185a), die auf einer Vorderseite der Signalverarbeitungsvorrichtung (300) angeordnet ist und einen ersten Ton in einer vorderen Richtung ausgibt; und
eine zweite Lautsprechereinheit (185b), die oben auf der Signalverarbeitungsvorrichtung (300) angeordnet ist,
wobei die zweite Lautsprechereinheit (185b) einen Gruppenlautsprecher mit einer Mehrzahl von Lautsprechern enthält, und
wobei, nachdem eine Abdeckung (1100) an der Oberseite der Signalverarbeitungsvorrichtung (300) geöffnet ist, die zweite Lautsprechereinheit (185b) aufgeklappt und gekippt wird und einen zweiten Ton in einer Richtung zwischen der vorderen Richtung und einer Deckenrichtung ausgibt.

2. Bildanzeigevorrichtung nach Anspruch 1, wobei ein Frequenzband des zweiten Tons, der von der zweiten Lautsprechereinheit (185b) ausgegeben wird, schmaler ist als ein Frequenzband des ersten Tons, der von der ersten Lautsprechereinheit (185a) ausgegeben wird.

3. Bildanzeigevorrichtung nach Anspruch 1, wobei eine Verstärkung eines Verstärkers in der zweiten Lautsprechereinheit (185b) größer ist als eine Verstärkung eines Verstärkers in der ersten Lautsprechereinheit (185a).

4. Bildanzeigevorrichtung nach Anspruch 1, ferner umfassend eine Audioverarbeitungsvorrichtung (370) zum Ausgeben eines ersten Audiosignals durch Durchführen einer Audiosignalverarbeitung an Eingabeinhalten,
wobei die erste Lautsprechereinheit (185a) einen ersten Verstärker zum Verstärken des ersten Audiosignals und einen ersten Lautsprecher zum Ausgeben des ersten Tons basierend auf dem durch den ersten Verstärker verstärkten Audiosignal umfasst, und
wobei die zweite Lautsprechereinheit (185b) einen Filter zum Filtern des ersten Audiosignals, einen zweiten Verstärker zum Verstärken des gefilterten ersten Audiosignals und die Mehrzahl von Lautsprechern zum Ausgeben des zweiten Tons basierend auf dem durch den zweiten Verstärker verstärkten Audiosignal umfasst.

5. Bildanzeigevorrichtung nach Anspruch 4, wobei die Audioverarbeitungsvorrichtung (370) umfasst:
einen Audiodecodierer (602) zum Durchführen einer Audiodecodierung der Inhalte und einen Abwärtsmischer (604) zum Ausgeben des ersten Audiosignals eines zweiten Kanals durch Heruntermischen eines von dem Audiodecodierer empfangenen Audiosignals eines ersten Kanals.

6. Bildanzeigevorrichtung nach Anspruch 1, ferner umfassend eine Audioverarbeitungsvorrichtung (370) zum Ausgeben eines ersten Audiosignals und eines zweiten Audiosignals durch Durchführen einer Audiosignalverarbeitung an Eingabeinhalten, wobei das zweite Audiosignal durch Filtern des ersten Audiosignals erzeugt wird,
wobei die erste Lautsprechereinheit (185a) einen ersten Verstärker zum Verstärken des ersten Audiosignals und einen ersten Lautsprecher zum Ausgeben des ersten Tons basierend auf dem durch den ersten Verstärker verstärkten Audiosignal umfasst, und
wobei die zweite Lautsprechereinheit einen zweiten Verstärker zum Verstärken des zweiten Audiosignals und die Mehrzahl von Lautsprechern zum Ausgeben des zweiten Tons basierend auf dem durch den zweiten Verstärker verstärkten Audiosignal umfasst.

7. Bildanzeigevorrichtung nach Anspruch 6, wobei die Audioverarbeitungsvorrichtung umfasst:
einen Audiodecodierer (602) zum Durchführen einer Audiodecodierung der Inhalte, einen Abwärtsmischer (604) zum Ausgeben des ersten Audiosignals eines zweiten Kanals durch Heruntermischen eines Audiosignals eines ersten Kanals, das von dem Audiodecodierer empfangen wird, und
einen Filter (610) zum Ausgeben des zweiten Audiosignals durch Filtern des ersten Audiosignals.

8. Bildanzeigevorrichtung nach Anspruch 1, ferner umfassend eine Audioverarbeitungsvorrichtung (370) zum Ausgeben eines ersten Audiosignals durch Durchführen einer Audiosignalverarbeitung an Eingabeinhalten,
wobei die erste Lautsprechereinheit (185a) einen ersten Filter zum Filtern des ersten Audiosignals, einen ersten Verstärker zum Verstärken des gefilterten ersten Audiosignals und einen ersten Lautsprecher zum Ausgeben des ersten Tons basierend auf dem durch den ersten Verstärker verstärkten Audiosignal umfasst, und wobei die zweite Lautsprechereinheit (185b) einen zweiten Filter zum Filtern des ersten Audiosignals, einen zweiten Verstärker zum Verstärken des gefilterten ersten Audiosignals und die Mehrzahl von Lautsprechern zum Ausgeben des zweiten Tons basierend auf dem durch den zweiten Verstärker verstärkten Audiosignal umfasst.

9. Bildanzeigevorrichtung nach Anspruch 8, wobei ein Frequenzband des zweiten Filters höher ist als ein Frequenzband des ersten Filters.

10. Bildanzeigevorrichtung nach Anspruch 1, wobei die zweite Lautsprechereinheit (185b) zumindest drei Lautsprecher enthält.

11. Bildanzeigevorrichtung nach Anspruch 1, wobei die zweite Lautsprechereinheit (185b) eine erste Gruppe aus ersten und zweiten Lautsprechern, eine zweite Gruppe aus dritten, vierten und fünften Lautsprechern und eine dritte Gruppe aus sechsten und siebten Lautsprechern umfasst.

## Revendications

1. Appareil d'affichage d'image (100) comprenant :
un afficheur (180) ;
un dispositif de traitement de signaux (300) pour émettre un signal vidéo pour l'afficheur (180) ;
une première unité de haut-parleur (185a) disposée sur une surface avant du dispositif de traitement de signaux (300) et pour émettre un second son dans une direction avant ; et
une seconde unité de haut-parleur (185b) disposée sur la partie supérieur du dispositif de traitement de signaux (300),
la seconde unité de haut-parleur (185b) comprenant un haut-parleur de réseau avec une pluralité de haut-parleurs, et
une fois qu'un couvercle (1100) sur la partie supérieure du dispositif de traitement de signaux (300) est ouvert, la seconde unité de haut-parleur (185b) surgit et s'incline, et émet un second son vers une direction entre la direction avant et la direction du plafond.

2. Appareil d'affichage d'image selon la revendication 1, dans lequel une bande de fréquences de la seconde sortie sonore provenant de la seconde unité de haut-parleur (185b) est plus étroite qu'une bande de fréquences de la première sortie sonore provenant de la première unité de haut-parleur (185a).

3. Appareil d'affichage d'image selon la revendication 1, dans lequel un gain d'un amplificateur dans la seconde unité de haut-parleur (185b) est supérieur à un gain d'un amplificateur dans la première unité de haut-parleur (185a).

4. Appareil d'affichage d'image selon la revendication 1, comprenant en outre un dispositif de traitement audio (370) pour émettre un premier signal audio en effectuer un traitement de signal audio sur des contenus d'entrée.
la première unité de haut-parleur (185a) comprenant un premier amplificateur pour amplifier le premier signal audio, et un premier haut-parleur pour émettre le premier son en fonction du signal audio amplifié par le premier amplificateur, et
la seconde unité de haut-parleur (185b) comprenant un filtre pour filtrer le premier signal audio, un second amplificateur pour amplifier le premier signal audio filtré, et la pluralité de haut-parleurs pour émettre le second son en fonction du signal audio amplifié par le second amplificateur.

5. Appareil d'affichage d'image selon la revendication 4, dans lequel le dispositif de traitement de signaux (370) comprend :
un décodeur audio (602) pour effectuer le décodage audio sur les contenus, et
un mélangeur abaisseur (604) pour émettre le premier signal audio d'un second canal par mélange abaisseur d'un signal audio d'un premier canal reçu en provenance du décodeur audio.

6. Appareil d'affichage d'image selon la revendication 1, comprenant en outre un dispositif de traitement audio (370) pour émettre un premier signal audio et un second signal audio par réalisation d'un traitement de signal audio sur les contenus d'entrée, la second signal audio étant produit par filtrage du premier signal audio,
la première unité de haut-parleur (185a) comprenant un premier amplificateur pour amplifier le premier signal audio, et un premier haut-parleur pour émettre le premier son en fonction du signal audio amplifié par le premier amplificateur, et
la seconde unité de haut-parleur comprenant un second amplificateur pour amplifier le second signal audio, et la pluralité des haut-parleurs pour émettre le second son en fonction du signal audio amplifié par le second amplificateur.

7. Appareil d'affichage d'image selon la revendication 6, dans lequel le dispositif de traitement audio comprend :
un décodeur audio (602) pour effectuer le décodage audio sur les contenus,
un mélangeur abaisseur (604) pour émettre le premier signal audio d'un second canal par mélange abaisseur d'un signal audio d'un premier canal reçu en provenance du décodeur, et
un filtre (610) pour sortir le second signal audio par filtrage du premier signal audio.

8. Appareil d'affichage d'image selon la revendication 1, comprenant en outre un dispositif de traitement audio (370) pour émettre un premier signal audio en effectuer un traitement de signal audio sur des contenus d'entrée.
la première unité de haut-parleur (185a) comprenant un premier amplificateur pour filtrer le premier signal audio, un premier amplificateur pour amplifier le premier signal audio, et un premier haut-parleur pour émettre le premier son en fonction du signal audio amplifié par le premier amplificateur, et
la seconde unité de haut-parleur (185b) comprenant un second filtre pour filtrer le premier signal audio, un second amplificateur pour amplifier le premier signal audio filtré, et la pluralité de haut-parleurs pour émettre le second son en fonction du signal audio amplifié par le second amplificateur.

9. Appareil d'affichage d'image selon la revendication 8, dans lequel une bande de fréquences du second filtre est supérieure à une bande de fréquences du premier filtre.

10. Appareil d'affichage d'image selon la revendication 1, dans lequel la seconde unité de haut-parleur (185b) comprend au moins trois haut-parleurs.

11. Appareil d'affichage d'image selon la revendication 1, dans lequel la seconde unité de haut-parleur (185b) comprend un premier groupe de premiers et seconds haut-parleurs, un deuxième groupe de troisième, quatrième et cinquième haut-parleurs, et un troisième groupe de sixième et septième haut-parleurs.
